Europäisches Patentamt

European Patent Office

Office européen des brevets

(19)

(11) Veröffentlichungsnummer: **0 229 350 B1**

# EUROPÄISCHE PATENTSCHRIFT

(12)

(45) Veröffentlichungstag der Patentschrift: 06.03.91

(51) Int. Cl.⁵: **B60T 7/04**, B60T 13/24

(21) Anmeldenummer: 86117547.9

(22) Anmeldetag: 17.12.86

(54) Betätigungsvorrichtung mit einem Pedal und einer an diesem gelenkig angelenkten Druckstange.

(30) Priorität: 15.01.86 DE 3600898

(43) Veröffentlichungstag der Anmeldung:
22.07.87 Patentblatt 87/30

(45) Bekanntmachung des Hinweises auf die
Patenterteilung:
06.03.91 Patentblatt 91/10

(84) Benannte Vertragsstaaten:
**DE ES FR GB IT**

(56) Entgegenhaltungen:
EP-A- 0 049 774      EP-A- 0 148 670
DE-A- 3 203 235      DE-A- 3 307 888
DE-B- 2 361 194      US-A- 1 939 221

(73) Patentinhaber: **VOLKSWAGEN AKTIENGESELL-SCHAFT**

**W-3180 Wolfsburg(DE)**

(72) Erfinder: **Klopp, Horst, Dipl.-Ing.
An der Rischmühlenriede 4
W-3172 Isenbüttel(DE)**

## Beschreibung

Die Erfindung bezieht sich auf eine Betätigungsvorrichtung der im Oberbegriff des Patentanspruchs genannten Art, wie sie beispielsweise aus der EP-A- 0 148 670 bekannt ist.

Die Herstellung der gelenkigen Verbindung der Druckstange eines im Motorraum angeordneten Hauptbremszylinders oder Bremskraftverstärkers der Bremsanlage eines Kraftfahrzeuges mit dem im Fahrgastraum angeordneten Bremspedal erfolgt üblicherweise mit Hilfe eines Lagerbolzens, der durch entsprechende Ausnehmungen einer Gelenkgabel sowie eines Steges an der Druckstange bzw. am Bremspedal hindurchgreift und mittels eines Sicherungsringes o. ä. gesichert ist. Die Herstellung der Verbindung erfolgt also an einer vergleichsweise schwer zugänglichen Stelle und ist nur manuell durchzuführen.

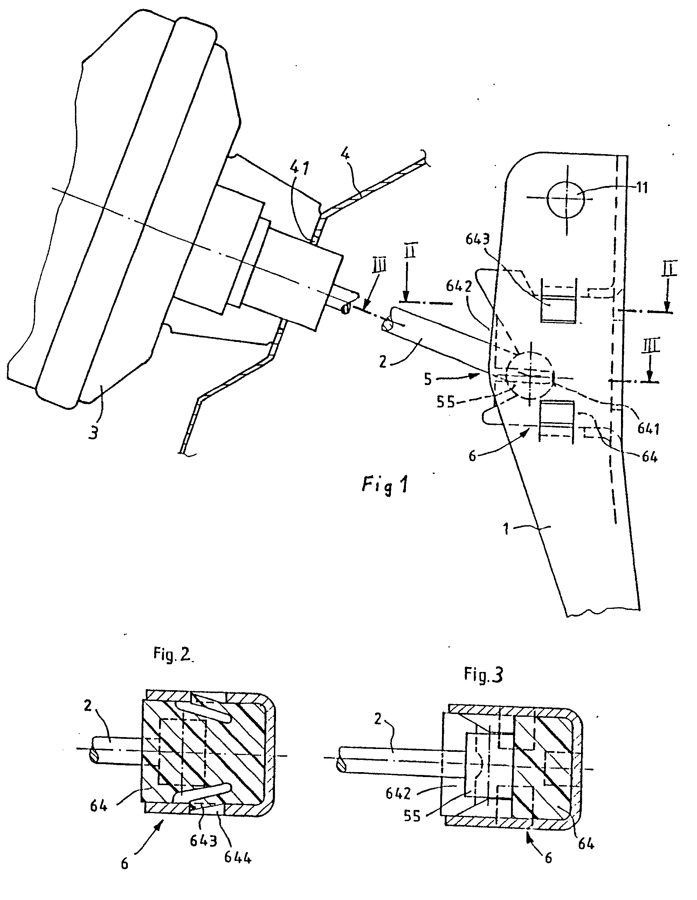

Demgegenüber wird die Gelenkverbindung zwischen Druckstange und Pedal bei der aus der EP-A- 0 148 670 bekannten Betätigungsvorrichtung durch eine einfache Schnappverbindung hergestellt, bei welcher ein kugelkopfförmig ausgebildetes Lagerteil des freien Endes der Druckstange durch eine Federklammer hindurch in ein im Pedalsteg eingeformtes, als kalottenförmige Lagerpfanne ausgebildetes Aufnahmeteil hineingedrückt ist. Bei dieser Ausbildung erscheint grundsätzlich auch eine vollautomatische Endmontage der Betätigungsvorrichtung möglich, wenn dies auch im einzelnen nicht angesprochen ist. Obgleich konstruktive Einzelheiten dieser bekannten Pedal- und Lagerpfannenausbildung textlich nicht näher erläutert sind, besteht das Pedal bzw. der Pedalsteg ausweislich der Schnittdarstellungen der Figuren 2 und 4 offenbar aus zwei flächig aneinanderliegenden und wohl durch Klebung oder Schweißung miteinander verbundenen Blechteilen, deren Teilfuge im Bereich der Gelenkverbindung zur Aufnahme des kugelkopfförmigen Druckstangenendes kalottenförmig aufgeweitet ist.

Bekanntlich müssen je nach Fahrzeugtyp und je nach Ausstattung der Fahrzeugtypen unterschiedlich große Bremskräfte erzeugt und somit auch oft unterschiedlich hohe Pedalkräfte aufgebracht werden. Im allgemeinen werden daher für unterschiedliche Fahrzeugtypen und/oder unterschiedliche Fahrzeugausstattungen verschieden große Pedalübersetzungen und/oder Bremspedale unterschiedlicher Materialstärke, d. h. mit unterschiedlich dicken Pedalstegen eingesetzt, was eine entsprechend große Teilevielfalt mit den bekannten Nachteilen bezüglich Logistik und Lagerhaltung bedeutet.

Demzufolge liegt der Erfindung die Aufgabe zugrunde, eine Betätigungsvorrichtung der im Oberbegriff des Patentanspruchs genannten Art weiter zu verbessern und insbesondere so auszubilden, daß einerseits eine vollautomatische Endmontage der Betätigungsvorrichtung möglich ist und andererseits die Teilevielfalt dadurch verringert wird, daß für bezüglich der Pedalübersetzung oder der Pedalausführung unterschiedliche Betätigungsvorrichtungen möglichst viel Gleichteile Verwendung finden.

Diese Aufgabe wird erfindungsgemäß durch die Merkmale des Patentanspruchs gelöst.

Anhand eines in der Zeichnung dargestellten Ausführungsbeispiels wird die Erfindung nachstehend näher erläutert:

In der Zeichnung zeigen

Fig. 1    die Seitenansicht eines Ausführungsbeispiels der erfindungsgemäßen Betätigungsvorrichtung,

Fig. 2    eine geschnittene Detailansicht dieser Vorrichtung entlang der Schnittführung II und

Fig. 3    eine weitere geschnittene Detailansicht dieser Betätigungsvorrichtung entlang der Schnittführung III.

An der den Fahrgastraum vom Motorraum trennenden sogenannten Spritzwand 4 eines Kraftfahrzeuges ist motorraumseitig ein mit einem Hauptbremszylinder zusammenwirkender Bremskraftverstärker 3 befestigt.

Fahrgastraumseitig ist u. a. ein Bremspedal 1 angeordnet, welches um eine Lagerachse 11 schwenkbar an einem nicht weiter dargestellen Pedalbock o. ä. angelenkt ist, welcher seinerseits ortsfest, z. B. an der Trennwand 4 des Fahrzeuges befestigt ist. Das Bremspedal 1 kann hierbei Teil eines auch das Gaspedal und das Kupplungspedal enthaltenden Fußhebelwerks sein, welches - ggf. zusammen mit dem Armaturenbrett oder Teilen davon - als vormontierte Baueinheit insbesondere im Rahmen einer automatischen Montage ins Fahrzeug eingebaut werden kann.

Die Betätigungskraft des Bremspedals 1 wird über eine gelenkig an ihm angelenkte einteilige Druckstange 2, welche durch einen in der Spritzwand 4 angeordneten Durchlaß 41 in den Motorraum hindurchgreift, auf den Bremskraftverstärker 3 übertragen, an dessen Steuerkolben o. ä. sie in üblicher Ausgestaltung angelenkt ist.

Die Gelenkverbindung zwischen dem pedalseitigen Ende der Druckstange 2 und dem Bremspedal 1 ist als Rast- oder Schnappverbindung ausgebildet, bei der am Druckstangenende ein Lagerteil 5 und am Pedal 1 ein auf dieses abgestimmtes Aufnahmeteil 6 befestigt ist, wobei das Lagerteil 5 durch eine federnde Rast- oder Verriegelungsvorrichtung, die beim Einschieben des Lagerteils überdrückt wird, annähernd spielfrei in einer Lagerpfanne des Aufnahmeteils 6 gehalten wird.

Im Ausführungsbeispiel ist das Lagerteil 5 als Lagerzapfen 55 ausgebildet, welcher parallel zur Pedalschwenkachse, d. h. parallel zur Lagerachse 11 ausgerichtet ist, was in Verbindung mit Fig. 2 und 3 deutlich zu erkennen ist.

Im Ausführungsbeispiel wird der Lagerzapfen 55 nicht unmittelbar in ein blechförmiges Aufnahmeteil eingedrückt, sondern in ein besonderes Einsatzteil 64 aus Kunststoff, welches Bestandteil des Aufnahmeteils 6 des Pedals 1 ist. Im Einsatzteil ist eine hinterschnittene Lagerpfanne 641 eingeformt, in die der Lagerzapfen 55 eingedrückt werden kann. Eingangs der Lagerpfanne 641 ist dabei ein etwa trichterförmiger Einführbereich 642 vorgesehen, durch den Lagerzapfen 55 und Lagerpfanne 641 bei der Montage selbsttätig zueinander geführt werden.

Durch die eigenelastischen Eigenschaften des Kunststoffs des Einsatzteils 64 sowie durch die Hinterschneidung der Lagerpfanne 641, d. h. dadurch, daß deren Eingangsöffnung kleiner ist als der Lagerzapfendurchmesser, wird der Lagerzapfen in der Lagerpfanne sicher und weitgehend spielfrei gehalten, ohne daß eine eigenständige Feder- oder Rastvorrichtung erforderlich würde.

Das Einsatzteil 64 selbst ist in ein etwa U-förmiges Blechteil des Aufnahmeteils 6 eingeclipst, wozu - wie in Fig. 2 erkennbar - in den Seitenschenkeln des Blechteils fensterartige Ausschnitte 644 angeordnet sind und das Einsatzteil 64 mit eigenfedernd abgespreizten seitlichen Flügeln 0. ä. 643 ausgestattet ist, welche in die fensterförmigen Ausschnitte 644 einrasten. Das Lagerglied 5 kann statt zapfenförmig natürlich auch kugelförmig ausgebildet sein.

Die Verwendung eines solchen Einsatzteils bietet u. a. den Vorteil, in ihrer Geometrie unterschiedlich ausgebildete Einsatzteile in jeweils gleich ausgebildete Bremspedale einclipsen zu können, um so in einfacher Weise unterschiedliche Pedalübersetzungen zu verwirklichen. Durch diese Ausbildung wird somit eine Verringerung der Teilevielfalt erzielt.

Bei der automatischen Montage wird zunächst einfach das Bremspedal 1 am nicht weiter dargestellten Pedalbock oder aber der das Bremspedal 1 tragende Pedalbock z. B. an der Spritzwand 4 montiert. Das Bremspedal, insbesondere das daran befestigte Aufnahmeteil 6 nimmt dabei eine räumlich definierte Lage ein, die lediglich im Rahmen üblicher Einbautoleranzen schwanken kann. Anschließend wird der die Druckstange 2 tragende Bremskraftverstärker 3 montiert, wobei die Druckstange 2 von der Motorraumseite her durch den in der Spritzwand 4 vorgesehenen Durchlaß 41 in den Fahrgastraum hineinragt. Die räumliche Ausrichtung der Druckstange 2 ist dabei im Rahmen üblicher Einbautoleranzen genau definiert, da zum einen der Bremskraftverstärker 3 räumlich definiert an der Spritzwand 4 befestigt wird und zum anderen die in üblicher Ausgestaltung am Steuerkolben des Bremskraftverstärkers angelenkte Druckstange selbst grundsätzlich nur sehr geringfügig, z. B. maximal $\pm$ 3° ausgelenkt werden kann. Es ist leicht erkennbar, daß demzufolge während der Montage das Lagerteil 5 einerseits und das Aufnahmeteil 6 andererseits ohne Einsatz irgendwelcher zusätzlicher Hilfsvorrichtungen oder sonstiger Manipulationen in eine räumliche Lage gelangen, in der die Schnappverbindung durch leichten Druck auf das Bremspedal 1 hergestellt wird.

## Ansprüche

1.  Betätigungsvorrichtung mit einem Pedal (1) und einer an diesem gelenkig angelenkten einteiligen Druckstange (2) zur Übertragung der Betätigungskräfte, insbesondere auf einen Hauptbremszylinder oder einen Bremskraftverstärker der Bremsanlage eines Kraftfahrzeuges, wobei die am pedalseitigen Ende der Druckstange (2) angeordnete Gelenkverbindung (5,6) mit dem Pedal (1) als Schnappverbindung mit einem an der Druckstange (2) befestigten, zapfen- oder kugelförmigen Lagerteil (5) und einem am pedal (1) befestigten Aufnahmeteil (6) ausgebildet ist, und wobei im Aufnahmeteil (6) zur Lagerung des Lagerteils (5) eine Lagerpfanne (641) 0. ä. angeordnet ist, in der das Lagerteil (5) durch eine bei seinem Einschieben überdrückbare, die Schappverbindung bildende, federnde Rast- oder Verriegelungsvorrichtung annähernd spielfrei gehalten wird,

    dadurch gekennzeichnet, daß die Rast- oder Verriegelungsvorrichtung die durch als integralev Teil der Gelenkverbindung (5,6) ausgebildet ist, daß das Aufnahmeteil (6) ein in einen im Querschnitt etwa U-förmigen Teil des Pedals (1) einclipsbares Einsatzteil (64) aus Kunststoff enthält, in welches die Lagerpfanne (641) mit einer Hinterschneidung eingeformt inst, in die das Lagerteil (55) eindrückbar ist,

    und daß das Einsatzteil (64) eingangs der Lagerpfanne (641) einen trichterförmigen Einführbereich (642) aufweist.

## Claims

1.  Actuating device having a pedal (1) and a one-piece pressure rod (2), which is hinged thereto in an articulated manner, for transmitting the actuating forces, in particular to a master brake cylinder or a brake force booster of the braking system of a motor vehicle, wherein the articulated joint (5, 6), which is disposed on the end of the pressure rod (2) at the pedal end thereof with the pedal (1) is in the form of a snap connection having a pin-shaped or ball-shaped bearing part (5), which is fastened on the pressure rod (2), and a reception part (6), which is fastened on the pedal (1), and wherein there is disposed in the reception part (6) for mounting the bearing part (5) a bearing socket (641) or the like, in which the bearing part (5) is retained substantially without play by a resilient latching or locking device which on insertion can be pressed over and which forms the snap connection, characterised in that the latching or locking device is so formed as an integral part of the articulated joint (5, 6), the reception part (6) contains an insert (64) made of plastics material, which can be clipped into a part of the pedal (1), the cross section of which part is substantially U-shaped, and in which insert the bearing socket (641) is moulded with a rearward cut into which the bearing part (55) can be pressed, and the insert (64) has at the entry to the bearing socket (641) a funnelshaped insertion region (642).

## Revendications

1. Dispositif de commande comportant une pédale (1) et une tige monobloc (2) de poussoir qui est articulée sur la pédale et destinée à transmettre les efforts de commande, en particulier à un maître-cylindre de frein ou à un cylindre de servofrein du système de freinage d'une automobile, où l'articulation (5, 6) située à l'extrémité de la tige (2) de poussoir, du côté de la pédale, et reliant la tige à la pédale (1), est réalisée sous forme d'une liaison à encliquetage comportant une pièce (5) d'appui en forme de tenon ou sphérique fixée à la tige (2) de poussoir et une pièce réceptrice (6) fixée sur la pédale (1), et où une coquille réceptrice (641) ou similaire est disposée dans la pièce réceptrice (6) et destinée à recevoir la pièce (5) d'appui qui y est maintenue presque sans jeu grâce à un dispositif élastique d'encliquetage ou de verrouillage qui est compressible lors de l'emmanchement de la pièce d'appui et constitue la liaison par encliquetage, caractérisé par le fait que le dispositif d'encliquetage ou de verrouillage forme une partie intégrante de l'articulation (5, 6), par le fait que la pièce réceptrice (6) comporte un insert (64) en matière plastique, qui peut s'enclencher dans une partie de la pédale (1) dont le profil se rapproche de la forme d'un U, et contient la coquille réceptrice évidée (641) dans laquelle s'emboîte le tenon (55), et par le fait que l'insert (64) comporte, à l'entrée de la coquille réceptrice (641), une partie (642) de guidage en forme de trémie.

Fig 1

Fig. 2.

Fig. 3